(19) Europäisches Patentamt
European Patent Office
Office européen des brevets

(11) **EP 4 403 886 A1**

(12) **EUROPEAN PATENT APPLICATION**

(43) Date of publication:
**24.07.2024 Bulletin 2024/30**

(21) Application number: **24152838.9**

(22) Date of filing: **19.01.2024**

(51) International Patent Classification (IPC):
***G01G 19/03*** *(2006.01)*

(52) Cooperative Patent Classification (CPC):
**G01G 19/03**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.01.2023 IT 202300000939**

(71) Applicants:
• **Consorzio per la Ricerca e lo Sviluppo di Tecnologie per il Trasporto Innovativo in forma abbreviata Consorzio TRAIN**
**75026 Rotondella (MT) (IT)**

• **ANAS S.p.A. Società con socio unico**
**00185 Roma (IT)**

(72) Inventors:
• **GALDI, Vincenzo**
**84084 FISCIANO (SA) (IT)**
• **RIZZANO, Gianvittorio**
**84084 FISCIANO (SA) (IT)**
• **NAPOLI, Annalisa**
**84084 FISCIANO (SA) (IT)**
• **CALDERARO, Vito**
**84084 FISCIANO (SA) (IT)**

(74) Representative: **Studio Torta S.p.A.**
**Via Viotti, 9**
**10121 Torino (IT)**

(54) **DYNAMIC WEIGHING SYSTEM FOR WEIGHING A VEHICLE**

(57) A weighing system for calculating the mass of a vehicle; preferably the weighing is dynamic, in particular the weighing is carried out while said vehicle passes over a plate (2) of the system (1) along a first direction (D); the system (1) comprising the plate (2), preferably in use installed along a road, a sensor assembly (3) installed on the plate (2), and preferably a sensing device (4) for detecting the speed (v) of the vehicle moving along the road; the sensor assembly (3) being configured to measure a force acting on the plate (2), in particular to detect a deformation, preferably an elastic deformation, on the plate (2); the control unit (10) being coupled in communication to the sensor assembly (3) to receive at least a first, a second and a third measurement (y1, y2, y3) from the sensor assembly (3) relating to the measured force acting on the plate (2), in particular to the deformation measured on the plate (2); the control unit (10) being coupled to the sensing device (4) to receive a detected speed measurement (v); the control unit (10) being configured to: calculate a maximum deformation of the plate (2) based on at least the first measurement (y1), the second measurement (y2) and the third measurement (y3) received from the sensor assembly (3) and based on the detected speed measurement (v); the control unit (10) being configured to calculate the mass of the vehicle based on said calculated maximum deformation.

FIG. 1

## Description

### CROSS-REFERENCE TO RELATED APPLICATIONS

This patent application claims priority from Italian patent application no. 102023000000939 filed on January 23, 2023, the entire disclosure of which is incorporated herein by reference.

### TECHNICAL FIELD

The present invention concerns a weighing system for calculating the mass of a vehicle and the relative method.

In particular, the invention concerns a dynamic weighing system for calculating the mass of a land vehicle that moves along a path, for example along a road.

### BACKGROUND

The known art includes equipment comprising at least one plate arranged along a road and comprising sensors. Furthermore, the equipment comprises a camera which has the function of identifying the vehicle that passes over the plate, capturing an image of the vehicle, in particular an image that shows at least a number plate of the vehicle. When the vehicle passes over the at least one plate, the sensors, through deformation of the plate, detect the mass and, therefore, the mass of the vehicle, and the equipment couples measurement of the mass with the vehicle, in particular with the number plate of the vehicle.

The sensors of the known art are usually strain gauges, namely instruments that detect deformation of the plate when the vehicle passes over said plate.

A problem of the known art is that measurement of the mass of the vehicle detected by means of said systems is not always correct.

### SUMMARY

The object of the present invention is to provide a weighing system for weighing a vehicle that provides better measurements of the vehicle mass than the known art.

According to the present invention, a weighing system for weighing a vehicle in accordance with claim 1 is therefore provided.

According to another aspect of the present invention a method is provided for weighing a vehicle in accordance with claim 8.

### BRIEF DESCRIPTION OF THE DRAWINGS

Further characteristics and advantages of the present invention will appear clear from the following description of non-limiting implementation examples, with reference to the figures of the attached drawings, in which:

- figure 1 is a simplified diagram of a system for calculating the mass of a vehicle in accordance with an embodiment of the present invention;

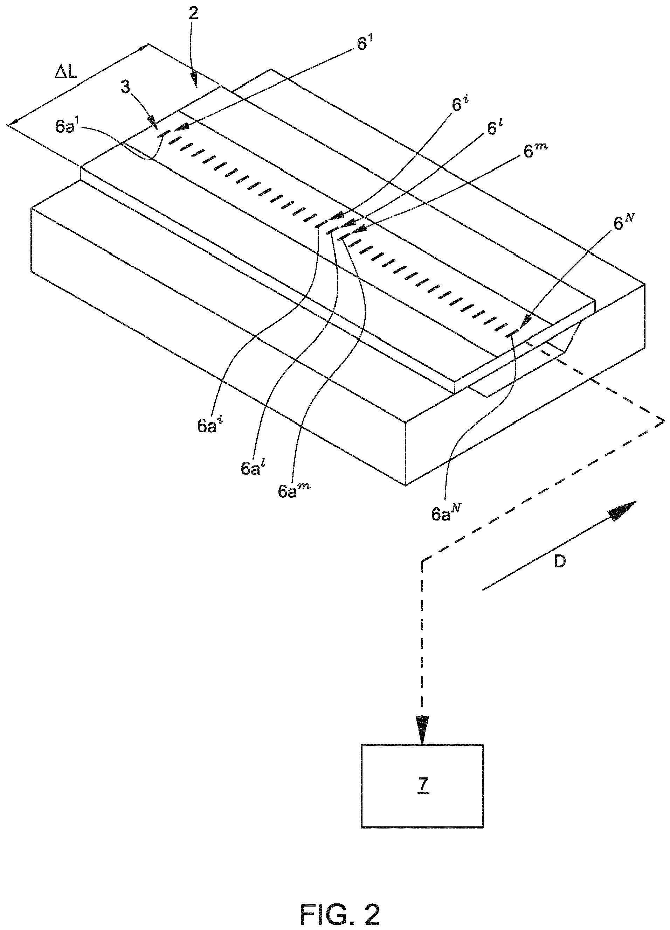

- figure 2 is a simplified diagram of a detail of the system of figure 1; and

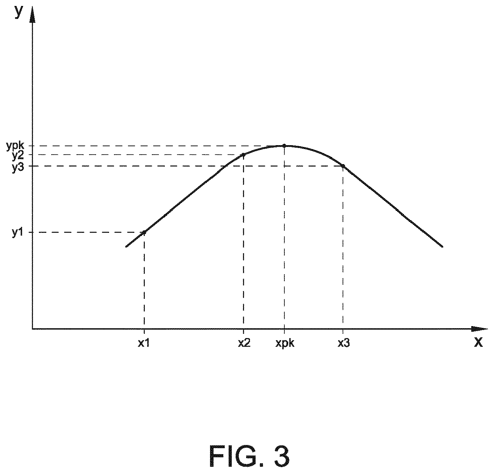

- figure 3 is a diagram that shows quantities and a function illustrated in detail below.

### DESCRIPTION OF EMBODIMENTS

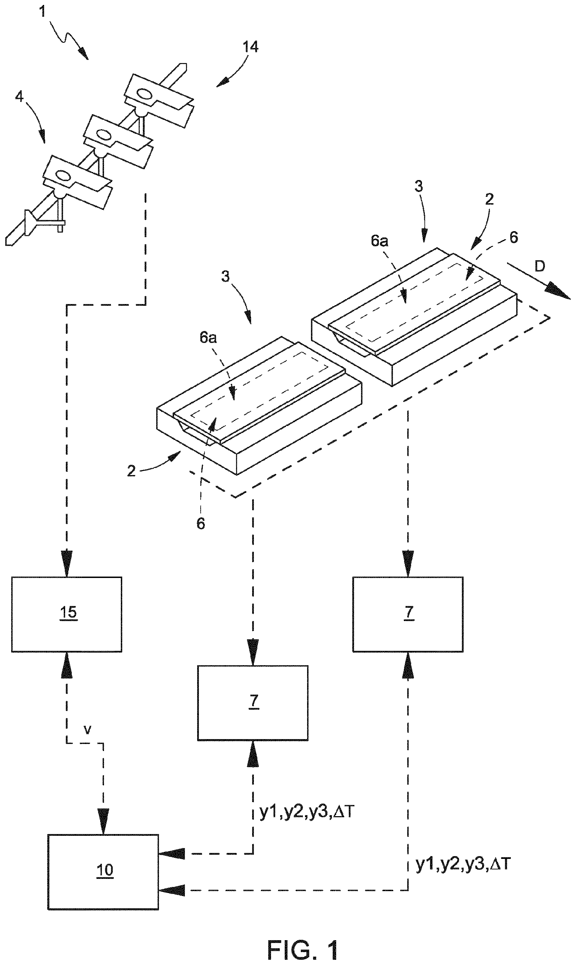

With reference to figure 1, the reference number 1 illustrates a weighing system for calculating the mass of a vehicle, preferably a dynamic weighing, in particular while a vehicle passes over at least one plate in a first direction D.

The weighing system 1 comprises at least one plate 2 (in the example shown two plates 2) and at least one sensor assembly 3 installed on each plate 2.

In use, the plate 2 is installed along a road and is configured so that the vehicles to be weighed pass over said plate 2.

Furthermore, the weighing system 2 comprises a sensing device 4 for detecting the speed v of said vehicle to be weighed which moves along the road and passes over the plate 2.

Each sensor assembly 3 is configured to measure a force that acts on the plate 2, in particular to detect a deformation, in particular an elastic deformation, of the plate 2 determined by the passage of the vehicle.

In a preferred embodiment, the sensor assembly 3 is a strain gauge.

In a preferred but non-limiting embodiment, the sensor assembly 3 comprises a sensing block 6, in particular comprising an optoelectronic system and/or a fibre optic sensor; and an acquisition and processing block 7 of the measured data.

In a preferred but non-limiting embodiment, the sensing block 6 is fixed on the plate 2, in particular on the side opposite the one over which the vehicles pass.

The acquisition and processing block 7 sends a signal to the sensing block 6 and measures a return signal. Through said return signal, the acquisition and processing block 7 measures the deformation of the sensing block 6 due to the force acting on the plate 2 and the value of said force.

In particular, the acquisition and processing block 7 is of the low consumption type.

In particular, the sensing block 6 of the sensor assembly 3 is arranged at a sensing point 6a of the plate 3 along the direction D and produces at least three measurements $y1$, $y2$, $y3$ in respective different time instants separated by at least one time interval $\Delta T$ for each wheel of the vehicle that passes over the plate 2.

In a non-limiting embodiment of the present invention, the plate 2 has a dimension $\Delta L$ measured along the direction D which is greater than 190 mm, in particular greater than 285 mm, in particular greater than 304 mm, in particular greater than 361 mm. In particular, the dimension ΔL is also defined as the transverse length of the plate along the direction D.

In a non-limiting embodiment of the present invention, the plate 2 has a dimension measured along the direction D which is smaller than 570 mm, in particular smaller than 475 mm, in particular smaller than 456 mm, in particular smaller than 399 mm.

In a preferred non-limiting embodiment of the present invention, the plate 2 has a dimension measured along the direction D which is equal to 380 mm with a tolerance of +/- 5%.

In a non-limiting embodiment of the present invention, the sensor assembly 3 has a sampling frequency which is greater than or equal to 600 Hz, consequently at least every 1.66 ms the sensor assembly 3 provides a measurement y.

In a preferred embodiment, the sensor assembly 3 has a sampling frequency which is greater than or equal to 700 Hz, consequently at least every 1.43 ms the sensor assembly 3 provides a measurement y.

In a preferred embodiment, the sensor assembly 3 has a sampling frequency which is greater than or equal to 800 Hz, consequently at least every 1.25 ms the sensor assembly 3 provides a measurement y.

In one embodiment, the system 1 is configured so that if the vehicle passes over the plate 2 at a speed of less than 160 km/h, preferably less than 130 km/h, the sensor assembly 3 detects at least three measurements y1, y2, y3 of deformation for said vehicle, in particular for each wheel of said vehicle that has passed over the plate 2.

The weighing system 1 comprises a control unit 10 coupled in communication to the sensor assembly 3 to receive the measurements y from the sensor assembly 3 relating to the measured force which acts on the plate 2, in particular the deformation measured on the plate 2.

In particular, for each wheel of the vehicle that passes over the plate 2, the control unit 10 receives the at least three deformation measurements y1, y2 and y3.

Furthermore, the control unit 10 is coupled to the sensing device 4 to receive a measurement of the speed v detected.

Furthermore, in a preferred non-limiting embodiment, the sensing device 4 is configured to detect, in addition to the speed v of the vehicle, one or more parameters selected from the following vehicle parameters: an outline of said vehicle, a position on the road of said vehicle, the number plate of said vehicle for identification of the vehicle and/or of the owner thereof, transit of the vehicle and the time instant in which it transits.

In a preferred embodiment, the sensing device 4 comprises at least a camera 14 and a processing unit 15.

In a non-limiting embodiment, the processing unit 15 is integrated in the camera 14.

In particular, the camera 14 captures at least one image of the vehicle and sends it to the processing unit 15 which is configured to detect at least one of the vehicle parameters based on the at least one image received.

In one embodiment, the processing unit 15 also detects the transit of the vehicle based on the at least one image received. In particular, the sensing device 4 functions in a continuous cycle, also called free run. In particular, in said embodiment, the sensing device 4 is configured to analyse the video in real time and produce transit events. In other words, the sensing device 4 produces a trigger or transit event, analysing in continuous cycle the images detected by the camera 14 or by one of the cameras 14 of the sensing device 4.

In another alternative embodiment, the system 1 is configured to detect transit of the vehicle based on the values detected by the sensor assembly 3 and activate the sensing device 4 when it detects transit of the vehicle.

In another alternative embodiment, the system 1 comprises a further sensor for detecting transit of the vehicle. In particular, the system 1 comprises a trigger or transit device that detects the transit of a vehicle and activates the sensing device 4.

In a preferred embodiment, the sensing device 4 is configured to recognise the vehicle and the classification thereof.

By way of example, the sensing device comprises a Vega Smart 2HD device which is able to read the number plates in 2 lanes, also with opposite direction of travel, estimating the travel speed of the vehicles and indicating the direction of transit.

The control unit 10 is configured to calculate a maximum deformation of the plate 2 based on at least the first deformation measurement y1, a second deformation measurement y2 and a third deformation measurement y3 received from the sensor assembly 3 and based on the speed v measurement detected.

Furthermore, the calculation unit 10 is configured to calculate the mass of the vehicle based on the deformations detected by each plate 2 and for each wheel of the vehicle during the passage of the vehicle.

In greater detail, the control unit 10 for each wheel detects at least the measurements y1, y2, y3 and calculates the maximum deformation of the plate 2 due to the passage of the wheel, and based on said deformation calculates the mass discharged by said wheel onto the ground. Lastly, it adds together the masses discharged by each wheel of the vehicle onto the ground and defines the overall mass of the vehicle.

In further detail, for each wheel that passes over the plate 3, the control unit 10 is configured to define the function of a curve, in particular the function of a parabola based on: the at least three deformation measurements y1, y2, y3; the speed v detected; and the at least one time interval ΔT between each of the deformation measurements y1, y2, y3.

The control unit 10 is configured to calculate a maximum value ypk of said curve, in particular the maximum value ypk of said parabola; and use said maximum value ypk to define the maximum deformation of the plate 3 along the direction of travel D; lastly, the control unit 10 is configured to calculate the mass discharged onto the ground by each wheel of the vehicle based on said maximum deformation calculated and to calculate the mass of the vehicle based on the sum of the mass discharged onto the ground by each wheel of each vehicle axle.

In further detail, after calculating the maximum value ypk, the control unit 10 calculates the position xpk relative to the maximum value ypk.

Furthermore, the control unit 10 calculates the mass of the vehicle based on the maximum deformation calculated and the position xpk calculated, in particular based on an elastic constant of the plate 2 in the position xpk calculated.

In an alternative embodiment, the control unit 10 defines xpk as equal to $\Delta L/2$, and determines the value ypk of the curve defined, in particular of the parabola, as the value y of the function of the curve in the point xpk.

In the embodiment illustrated, the parabola has its concavity facing upwards; in an alternative embodiment, the parabola has its concavity facing downwards, for example using negative deformation values, in said embodiment the minimum value of said curve is used instead of the maximum value illustrated above. In both cases, the object is to detect the maximum value of the deformation of the plate 2.

In other words, the control unit 10 is configured to calculate a peak value ypk of said curve, in particular a peak value ypk of said parabola, which can be a maximum peak value ypk or a minimum peak value ypk based on the direction in which the curve faces, and use said peak value ypk to define the maximum deformation of the plate 3 along the direction of travel D.

In further detail, the control unit 10 calculates the position xpk relative to the maximum value ypk and calculates the mass of the vehicle based on the maximum deformation calculated and the position xpk calculated, in particular based on the elastic constant of the plate 2 in the position xpk calculated.

In an alternative embodiment, the control unit 10 defines xpk as equal to $\Delta L/2$, and determines the value ypk of the curve defined, in particular of the parabola, as the value y of the function of the curve in the point xpk.

In further detail, the peak value ypk is detected in the centre of symmetry of said curve, in particular in the centre of symmetry of the parabola.

Thanks to the present invention, the deformation of the plate 2, and consequently the mass detected, is calculated based on the maximum or minimum peak value of the function of the curve, in particular of the parabola; in this way the deformation is evaluated in a point of the plate 2 in which there is maximum deformation, namely the centre of symmetry of the deformation, so as to obtain a more accurate measurement of the maximum deformation of the plate 2 and consequently of the mass detected.

In fact, the maximum or minimum peak value of the curve, in particular of the parabola, could be greater or lesser than one of the at least three values y1, y2, y3 and consequently, thanks to the present invention, a more accurate detection is obtained of the maximum deformation of the plate 3 and the mass because the maximum deformation is calculated based on the curve, in particular the parabola, derived from the at least three measurements y1, y2, y3 and not directly based on the maximum values of the three measurements y1, y2, y3.

In a preferred embodiment, the parabola function is used because it is the one that best describes the deformation of the plate 2; however, the use of other functions obtained from the at least three measurements y1, y2, y3 is not ruled out. For the purposes of the present invention, at least three measurements y1, y2, y3 are necessary because to interpolate a parabola function at least three measurements y1, y2, y3 are necessary. The number of measurements can be increased to any number greater than three.

The control unit 10 is configured to define the distance between a position x1 in which the first measurement y1 is taken and the respective positions x2 and x3 of the plate 2 in which the second measurement y2 and the third measurement y3 are detected based on the speed v detected and the time interval $\Delta T$ between two measurements.

The positions x1, x2 and x3 define positions along the plate 2, in particular along the direction D.

In further detail, the control unit 10 is configured to define the position x1, in which the first measurement y1 is detected, as equal to the ratio between the transverse length $\Delta L$ (namely along the direction of travel D) of the plate 2 and the number of measurements taken Nmis (Nmis is a number no less than 3).

Furthermore, the control unit 10 is configured to calculate the position x2, in which the second measurement y2 is detected, based on the speed v detected and the time interval $\Delta T$ between the measurements, in particular with the following formula:

$$x2 = x1 + \Delta x$$

in which

$$\Delta x = v * \Delta T$$

In further detail, the control unit 10 is configured to calculate the position x3, in which the third measurement y3 is detected, based on the speed v detected and the time interval $\Delta T$ between the measurements, in particular with the following formula:

$$x3 \; = \; x2 \; + \; \Delta x$$

in which

$$\Delta x \; = \; v * \Delta T$$

Alternatively

$$x3 \; = \; x1 \; + \; \Delta x3$$

in which

$$\Delta x3 \; = \; 2 * v * \Delta T$$

In general in the case of any number of measurements Nmis equal to or greater than 3, the formula to calculate the position xi, in which i is greater than 1 (in other words, all the positions of the measurements y except the position of the first measurement) is equal to:

$$xi \; = \; x(i-1) + \; \Delta x$$

In which

$$\Delta x \; = \; v * \Delta T \; .$$

Said positions x1, x2, and x3 (in the case of only three measurements) are used coupled with the respective measurements y1, y2 and y3 to define the points through which the curve passes, in particular the parabola, from which the maximum (or minimum) point is then calculated and therefore the maximum deformation of the plate.

In particular, once at least three deformation measurements y1, y2 and y3 and the respective positions x1, x2 and x3 are known, it is possible to determine the maximum deformation of the plate 2 in the point of symmetry thereof, determining the maximum deforming force which the vehicle produces on the plate 2.

In particular, the control unit 10 is configured to define the function of the curve, in particular the function of the parabola, interpolating with the function of the given curve, in particular with the function of the parabola, the points defined at least by the following pairs: the first measurement y1 and the first position x1; the second measurement y2 and the second position x2; and the third measurement y3 and the third position x3.

In a preferred embodiment of the present invention, the measurements y detected by the sensor assembly 3 at the passage of each wheel of each vehicle are at least five, consequently the control unit 10 defines the function of the curve, in particular the function of the parabola, interpolating the pairs of points defined by the five measurements y1-y5 and by the respective positions x1-x5 with the function of the given curve, in particular with the function of the parabola.

Furthermore, the control unit 10 is configured to detect the maximum value of said curve, in particular of said parabola, to define the maximum deformation of the plate 2 and use said maximum deformation of the plate 2 to define the mass of the vehicle, in particular of each wheel of each vehicle axle.

In further detail, the control unit 10 calculates the position xpk relative to the maximum value ypk and calculates the mass of the vehicle based on the maximum deformation calculated and the position xpk calculated, in particular based on the elastic constant of the plate 2 in the position xpk calculated.

In an alternative embodiment, the control unit 10 defines xpk as equal to $\Delta L/2$, and determines the value ypk of the curve defined, in particular of the parabola, as the value y of the function of the curve in the point xpk.

In a preferred but non-limiting embodiment of the present invention, the sensor assembly 2 comprises a plurality of sensing units $6^1$-$6^N$, each of which is arranged in a respective sensing point $6a^1$-$6a^N$; in which the sensing points $6a^1$-$6a^N$ are distributed along a direction which is transverse, preferably perpendicular, to the direction of travel D.

In particular, the sensing points $6a^1$-$6a^N$ and the respective sensing units $6^1$-$6^N$ are distributed along a direction parallel to a direction of maximum extension of the plate 2.

The control unit 10 is configured to select a sensing unit $6^i$ from the plurality of sensing units $6^1$-$6^N$ based on the measurements $y^1$-$y^N$ detected by each sensing unit $6^1$-$6^N$, in particular selecting the sensing unit $6^i$ that reports the highest value of all the sensing units $6^1$-$6^N$ at a given instant and to use the at least three measurements $y1^i$, $y2^i$ and $y3^i$ of said sensing unit $6^i$ selected to detect the maximum deformation of the plate and/or the mass of the vehicle.

In one embodiment, the control unit 10 is configured to select a group of the plurality of sensing units $6^i,6^l$, preferably adjacent to one another, based on the value detected by the respective sensing units $6^1$-$6^N$, preferably selecting the sensing units $6^i,6^l$ that have detected higher values than others, and to use the at least three measurements $y1^{i,l}$, $y2^{i,l}$, $y3^{i,l}$ of said group of sensing units $6^i,6^l$ selected to detect the maximum deformation of the plate and/or the mass of the vehicle.

In particular, the control unit 10 is configured to select two sensing units $6^i,6^l$, preferably adjacent to each other, or three sensing units $6^i,6^l,6^m$, preferably adjacent to one another, based on the values detected, preferably selecting the sensing units $6^i,6^l$; $6^i,6^l,6^m$ that have detected higher values than others, and to calculate a mean or a median of the values of said sensing units $6^i,6^l$; $6^i,6^l,6^m$ of the at least three measurements detected $y1^{i,l}$, $y2^{i,l}$, $y3^{i,l}$; $y1^{i,l,m}$, $y2^{i,l,m}$, $y3^{i,l,m}$ by each of the sensing units selected to detect the maximum deformation of the plate and/or the mass of the vehicle and the position along the direction orthogonal to the direction of travel of the wheel on the plate.

As said, the system 1 detects the mass of the vehicle but in addition can also be used to carry out further functions.

In particular, the system 1 is configured to manage heterogeneous data, with very different characteristics, dimension and acquisition frequency. The system 1 can therefore also be used for real time automated traffic management in order to make the movement of vehicles safer, more efficient and sustainable.

In fact, the system 1 acquires the data from the different sensors of the plates, the video flow, the traffic data and in addition to detecting the mass, it can be used for further functions.

It is important to note that the measurements of the plates are relative to the wheels of a single vehicle axle, thus requiring an aggregation step to obtain the total mass. In particular, the vehicles that pass over the plate are of different type and with a variable number of axles. As said, by means of the sensing system 4 the vehicle type and number of vehicle axles are detected and sent to the control unit 10, the control unit 10 adds the mass of the respective wheels of each vehicle axle and defines the total mass of the vehicle.

Thanks to the present invention, the system 1 allows the mass of a vehicle in movement to be accurately defined, in particular with an accuracy and a precision greater than the known art.

**Claims**

1. A weighing system for calculating the mass of a vehicle; preferably the weighing is dynamic, in particular the weighing is carried out while said vehicle passes over a plate (2) of the system (1) along a first direction (D); the system (1) comprising the plate (2), preferably in use installed along a road, a sensor assembly (3) installed on the plate (2), and preferably a sensing device (4) for detecting the speed (v) of the vehicle moving along the road; the sensor assembly (3) being configured to measure a force acting on the plate (2), in particular to detect a deformation, preferably an elastic deformation, on the plate (2); the control unit (10) being coupled in communication to the sensor assembly (3) to receive at least a first, a second and a third measurement (y1, y2, y3) from the sensor assembly (3) relating to the measured force acting on the plate (2), in particular to the deformation measured on the plate (2); the control unit (10) being coupled to the sensing device (4) to receive a detected speed measurement (v); the control unit (10) being configured to: calculate a maximum deformation of the plate (2) based on at least the first measurement (y1), the second measurement (y2) and the third measurement (y3) received from the sensor assembly (3) and based on the detected speed measurement (v); the control unit (10) being configured to calculate the mass of the vehicle based on said calculated maximum deformation.

2. The weighing system of claim 1, wherein the sensor assembly (3) comprises a sensing block (6) arranged at a sensing point (6a) and wherein the at least three measurements (y1, y2, y3) are detected at the same sensing point (6a) and at three different instants of time separated by at least one time interval (Δ T); preferably the at least three measurements (y1, y2, y3) taken at the same sensing point (6a) correspond to three different positions (x1, x2, x3) of the wheel on the plate (2).

3. The weighing system of claim 2, wherein the control unit (10) is configured to define the function of a curve, in particular the function of a parabola, based on: the data relating to the three measurements (y1, y2, y3), the data measured at the detected speed (v), the data relating to the at least one time interval (ΔT); calculate a peak value, in particular maximum or minimum, of said curve, in particular the peak value, in particular maximum or minimum, of said parabola and use this peak value, in particular maximum or minimum, to define the maximum deformation of the plate (2) along the direction of travel (D); preferably the control unit (10) being configured to calculate the mass of the vehicle on the basis of this calculated maximum deformation.

4. The weighing system of claim 3, in which the control unit (10) is configured to define the function of the curve, in particular the parabola function, by interpolating the data of the three measurements (y1, y2, y3) with the function of a given curve, in particular with the parabola function, in particular also using the data of the measured speed (v) and the time interval (ΔT) between the measurements.

5. The weighing system of claim 3 or 4, wherein the control unit (10) is configured to calculate a respective position (x1; x2; x3) for each measurement (y1, y2, y3), wherein at least the second position (x2) and the third position (x3) are calculated based on the detected speed (v) and a time interval (ΔT) between the measurements (y1, y2, y3); form at least a first pair of values comprising the first measurement (y1) and the respective first position (x1), a second pair of values comprising the second measurement (y2) and the respective second position (x2), and a third pair of values comprising the third measurement (x3) and the respective third position; and define the function of the curve, in particular the parabola function, on the basis of the said pairs of values.

6. The weighing system of any one of the preceding claims, the sensor assembly (3) comprising a plurality of sensing units ($6^1$-$6^N$), each of which is arranged at a respective sensing point ($6a^1$-$6a^N$); wherein the sensing points ($6a^1$-$6a^N$) are distributed along a transverse direction, preferably perpendicular, to the direction of travel (D).

7. The weighing system of any one of the preceding claims, the sensor assembly (3) comprising a plurality of sensing units ($6^1$-$6^N$), each of which is arranged at a respective sensing point ($6a^1$-$6a^N$); wherein the sensing points ($6a^1$-$6a^N$) are distributed along a direction parallel to a direction of maximum extension of the plate (2).

8. A weighing method for calculating the mass of a vehicle; preferably the weighing is dynamic, in particular the weighing is carried out while said vehicle passes over a plate (2) installed along a road moving along a first direction (D); the method comprising the steps of detecting a speed (v) of the vehicle moving along the road; measuring at least a first, a second and a third measurement (y1, y2, y3) of forces acting on the plate (2), in particular to detect a first, a second and a third measurement (y1, y2, y3) of deformation, preferably elastic, on the plate (2) due to the passage of the vehicle; the method comprising the steps of: calculating a maximum deformation of the plate (2) on the basis of at least the first measurement (y1), the second measurement (y2) and the third measurement (y3) and on the basis of the detected speed measurement (v); the method comprising the step of calculating the mass of the vehicle on the basis of said calculated maximum deformation.

9. The method of claim 8, wherein the method comprises the step of detecting said three measurements at the same detection point (6a) and wherein the at least three measurements (y1, y2, y3) are detected at three different instants of time separated by at least one time interval ($\Delta T$) and at the same detection point (6a); preferably the at least three measurements (y1, y2, y3) taken at the same sensing point (6a) correspond to three different positions (x1, x2, x3) of the wheel on the plate (2).

10. The method of claim 9, wherein the method comprises the step of defining the function of a curve, in particular the function of a parabola, based on: the data relating to the three measurements (y1, y2, y3), the data detected at the detected speed (v), the data relating to the at least one time interval ($\Delta T$); calculating a peak value, in particular maximum or minimum, of said curve, in particular the peak value, in particular maximum or minimum, of said parabola and use said peak value, in particular maximum or minimum, to define the maximum deformation of the plate (2) along the direction of travel (D); preferably, the method includes the step of calculating the mass of the vehicle on the basis of said calculated maximum deformation.

11. The method of claim 10, in which the step of defining the function of the curve, in particular the parabola function, includes the step of interpolating the data of the three measurements (y1, y2, y3) with the function of a given curve, in particular with the parabola function; in particular also using the data of the measured speed (v) and the time interval ($\Delta T$) between the measurements.

12. The method of claim 10 or 11, wherein the method further comprises the step of determining a respective position (x1; x2; x3) for each measurement (y1, y2, y3), wherein the at least second position (x2) and the third position (x3) are calculated based on the detected speed (v) and a time interval ($\Delta T$) between the measurements (y1, y2, y3); form at least a first pair of values comprising the first measurement (y1) and the respective first position (x1), a second pair of values comprising the second measurement (y2) and the respective second position (x2), and a third pair of values comprising the third measurement (x3) and the respective third position; and define the function of the curve, in particular the parabola function, on the basis of the said pairs of values.

13. The method of any one of claims 8 to 12, comprising the step of detecting a plurality of deformation forces, each at a respective sensing point ($6a^1$-$6a^N$); wherein the sensing points ($6a^1$-$6a^N$) are distributed along a transverse direction, preferably perpendicular, to the direction of travel (D).

14. The method of any one of claims 8 to 13, comprising the step of detecting a plurality of deformation forces, each at a respective sensing point ($6a^1$-$6a^N$); wherein the sensing points ($6a^1$-$6a^N$) are distributed along a direction parallel to a direction of maximum extension of the plate (2).

FIG. 1

FIG. 2

FIG. 3

Europäisches
Patentamt

European
Patent Office

Office européen
des brevets

# EUROPEAN SEARCH REPORT

**Application Number**

EP 24 15 2838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CH 713 161 A2 (DIGI SENS AG [CH]) 31 May 2018 (2018-05-31) | 1,8 | INV. G01G19/03 |
| A | * abstract; claims 1-16; figures 1-5 * <br> * paragraph [0015] * <br> * paragraph [0028] * <br> - - - - - | 2-7,9-14 | |

**TECHNICAL FIELDS SEARCHED (IPC)**

G01G

The present search report has been drawn up for all claims

| Place of search | Date of completion of the search | Examiner |
|---|---|---|
| The Hague | 13 May 2024 | Katerbau, Ragnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2838

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2024

| Patent document cited in search report | | Publication date | Patent family member(s) | | Publication date |
|---|---|---|---|---|---|
| CH 713161 | A2 | 31-05-2018 | CA | 3045252 A1 | 07-06-2018 |
| | | | CH | 713161 A2 | 31-05-2018 |
| | | | CN | 110268237 A | 20-09-2019 |
| | | | EP | 3548852 A2 | 09-10-2019 |
| | | | JP | 6746006 B2 | 26-08-2020 |
| | | | JP | 7097094 B2 | 07-07-2022 |
| | | | JP | 2020173272 A | 22-10-2020 |
| | | | JP | 2020513566 A | 14-05-2020 |
| | | | US | 2019391003 A1 | 26-12-2019 |
| | | | WO | 2018100475 A2 | 07-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000000939